# EUROPEAN PATENT APPLICATION

(11) **EP 4 524 005 A1**
(43) Date of publication of application: **19.03.2025**
(21) Application number: 23197407.2
(22) Date of filing: 14.09.2023
(51) Int. Cl.: B62D 35/00

(54) **VEHICLE HAVING AN AIR GUIDING ARRANGEMENT AND AIR GUIDING ARRANGEMENT**

(71) Applicant: Wuhan Lotus Cars Co., Ltd., Wuhan, Hubei (CN)
(72) Inventor: Fares, Ehab, 64673 Zwingenberg (DE); Verduyn, Thomas, 3207 Spijkenisse (NL)
(74) Representative: Studio Torta S.p.A.

(57) **Abstract**

The invention concerns a vehicle (10) having an air guiding arrangement (16), the air guiding arrangement (16) comprising:
- an air duct (18) having an inlet (22) and an outlet (24), wherein the inlet (22) is located in a front portion (11) of the vehicle (10) and the outlet (24) is located at an underside of the vehicle (10); and
- an air deflector (20),
wherein the air deflector (20) is arranged opposite to a circumferential face (15) of a vehicle wheel (14) and is closer to the front portion (11) of the vehicle (10) than at least a part of the outlet (24), and wherein the air duct (18) is configured to guide air from its outlet (24) into a space (25) in between the air deflector (20) and the vehicle wheel (14).

The invention also concerns an air guiding arrangement (16) for a vehicle (10).

## Description

The invention concerns a vehicle having an air guiding arrangement and also concerns an air guiding arrangement for a vehicle. The vehicle may in particular be a road vehicle, such as a car, a truck or a bus.

It is a common design goal to optimise vehicles in terms of their aerodynamic characteristics. One area of interest is the aerodynamic resistance of the vehicle wheels, in particular the front wheels. In order to limit said aerodynamic resistance, it is known to generate streams of air close to the wheels in order to form air curtains. Figuratively speaking, such air curtains at least partially shield the wheels from headwind or, differently put, from relative wind occurring when travelling forward.

EP 3 450 285 A1 teaches a connection path to guide air from a front area of the vehicle to an area in front of the front wheels, so that the air streams in the vehicle width direction out of the connection path.

JP 2009 248963 A and KR 10 20150045129 A also teach forming an air curtain in front of the vehicle wheels to reduce drag, but use pressurised air.

Another known measure is to provide air deflectors at an underside of the vehicle, wherein said air deflectors are positioned so as to at least partially shield the vehicle wheels from headwind.

Known solutions do not always achieve the desired aerodynamic improvements. Also, they can be structurally complex, in particular when they are based on using pressurised air. Moreover, the known air deflectors can reduce ground clearance and can be an unfavourable design choice.

It is thus an object of this invention to reliably reduce the aerodynamic resistance of vehicles. In particular, it is an object to reduce the aerodynamic resistance in a space-efficient manner and at a reduced complexity.

This object is solved by the subject matter according to the attached independent claims. Preferred embodiments are set out in the dependent claims, in this description and in the figures.

Accordingly, a vehicle having an air guiding arrangement is suggested, the air guiding arrangement comprising:
- an air duct having an inlet and an outlet, wherein the inlet is located in a front portion of the vehicle (but e.g. not at an underside of the vehicle) and the outlet is located at an underside of the vehicle (but e.g. at a distance to the front portion of the vehicle); and
- an air deflector,
wherein the air deflector is arranged opposite to a circumferential face of a vehicle wheel and is closer to the front portion of the vehicle than at least a part of the outlet, and wherein the air duct is configured to guide air out of its outlet into a space in between the air deflector and the vehicle wheel.

This air guiding arrangement generally helps to guide air flows around the vehicle wheels to limit their aerodynamic resistance. Said air flows may in particular occur in form of relative wind or headwind when driving. The above air guiding arrangement combines the air deflector and air duct to achieve a surprising synergistic effects. Specifically, it has been determined that the aerodynamic effects achieved by a combination of the air deflector and air duct can be higher than a mere summation their respective individual effects, i.e. the effects when providing only an air deflector or only an air duct. For example, the air deflector may help to at least partially and/or at least initially shield air streaming out of the outlet. This helps to generate a stable air stream from said outlet towards an intended region in the surroundings, in particular so as to form a stable air curtain in front of the vehicle wheel.

Moreover, providing the air duct allows for a reduction in size of the air deflector without necessarily increasing aerodynamic resistance of the vehicle wheel. In particular, a reduction of the length of the air deflector by which it protrudes from the vehicle's underside may be reduced, e.g. compared to known solutions where only an air deflector is present. On other hand, providing the air deflector may allow to reduce the size of the air duct, e.g. compared to only an air duct being present, while maintaining the same aerodynamic resistance.

The air duct may also be referred to as an air channel. It may define a fluidic connection path between the inlet and the outlet. The air duct may be formed by or in at least one member or may be delimited by a plurality of members. The inlet and outlet may both be openings to receive and expel air, respectively. The air duct may be free of any other openings apart from the inlet and the outlet. The air duct may guide an air stream along its longitudinal axis from the inlet to the outlet. The air duct may have a non-linear or non-straight course, e.g. an angled or a curved course. In one example, the air duct may have various angled portions along its length, thereby having multiple degrees of freedom to fit the air duct into the interior surroundings of the vehicle.

The front portion of the vehicle may be or comprise a front face of the vehicle. The front portion may comprise or be at least partially formed by a front skirt, a front bumper cover or some other cover. The inlet may be formed in a front skirt, a front bumper cover or some other cover and/or may generally be located in a front face of the vehicle. Alternatively, the inlet may be located directly adjacent to said front face and e.g. behind a front skirt, a front bumper cover or some other cover or, in other words, at a rear side of said front skirt, front bumper cover or some other cover.

The underside of the vehicle may be or comprise an underbody. It may face a road surface on which the vehicle travels.

The air deflector may at least partially cover the vehicle wheel, e.g. when viewed from a front face of the vehicle and/or along a longitudinal axis of the vehicle. Additionally or alternatively, it may at least partially shield the vehicle wheel from headwind. Generally, the vehicle wheel may be a front wheel of the vehicle. It may be a steerable vehicle wheel. For the sake of discussion, a straight orientation of the vehicle wheel when driving straight ahead may be assumed in this disclosure. This, however, does not mean that any of the teachings of this disclosure are limited to said straight orientation, if not mentioned or evident otherwise.

In one embodiment, the air deflector is located closer to the front portion of the vehicle than the vehicle wheel. In other words, when viewed in a forward driving direction, the air deflector may be located further ahead compared to the vehicle wheel. Accordingly, the space into which air is guided by the air duct may be located in front of the vehicle wheel and/or behind of the air deflector when viewed in the forward driving direction The forward driving direction may generally extend along a longitudinal axis of the vehicle. It may e.g. point from a rear of the vehicle to the front portion.

The outlet may face the road surface opposite the underside of the vehicle. For example, air streaming out of said outlet may stream towards said road surface. Accordingly, said air stream may stream along an axis extending at an angle to the vehicle's underside of e.g. at least 60° or of at least 80°. That is, the air stream may generally be non-parallel to the vehicle's underside. On the other hand, the air stream may be directed towards a region of the road surface below of the vehicle, e.g. instead of towards a region of the road surface remote from the vehicle.

Accordingly, the air stream may not predominantly stream in a width direction and/or in a longitudinal direction of the vehicle, but may e.g. stream predominantly along a vertical axis of the vehicle. This may include that a maximum vector component of an axis along which the air streams may extend in parallel to said vertical axis.

When viewed along a width axis of the vehicle, said width axis extending orthogonally to the longitudinal axis and to a vertical axis of the vehicle, the outlet and/or the air deflector may at least partially overlap with one another and/or with the vehicle wheel. That is, the outlet and the air deflector and/or the vehicle wheel may extend along a common section of said width axis. This helps to ensure that air expelled from the outlet stays close to the vehicle wheel to generate the air curtain.

According to established understanding in the technical field, the vehicle's longitudinal axis may extend in a forward driving direction and connect a front face and rear face of the vehicle. A vertical axis of the vehicle may correspond to a spatial vertical axis. The width axis may extend from a left to a right side of the vehicle, e.g. connecting left and right front or rear wheels.

According to another aspect, the air duct is configured to guide air towards and/or into a region of a road surface that is traversable by the vehicle wheel. This region may be located in front of the vehicle wheel, e.g. when viewed in a forward driving direction. When continuing travel, in particular straight ahead, the vehicle wheel may traverse and thus cross and/or drive through (or in other words: roll over) this region. According to this embodiment, it may not or only to a limited extent be provided that air streams in a width direction of the vehicle, thereby being laterally guided along the vehicle wheel. Instead, the air is guided vertically and in particular predominantly vertically. Especially in combination with the air deflector, this has been found to significantly reduce drag of the vehicle wheel.

A further embodiment provides that the inlet extends substantially in a first spatial plane and the outlet extends substantially in a second spatial plane, in particular wherein the first spatial plane and second spatial plane extend at an angle of at least 60° to one another. For example, the first spatial plane may be substantially vertical or at least more vertical that the second spatial plane which may e.g. be substantially horizontal. These spatial planes may comprise at least one edge region of the respective one of inlet and outlet. The first spatial plane may extend at a larger angle (in particular at an at least a twice as large or at least five times larger angle) to a horizontal spatial axis compared to the second spatial plane. For example, the first spatial plane may extend substantially vertically and/or the second spatial plane may extend substantially horizontally. This may help to increase an air intake by the inlet. Also, this helps to guide air from the outlet in a substantially vertical manner in front of the vehicle wheel and towards the opposite road surface.

In one example, the air duct comprises an air flow generator that is configured to enhance an air flow through the air duct. The air flow generator may in particular be a fan, a blower or a compressor. The air flow generator may be in fluidic communication with the inlet and outlet. It may generate an air flow in case no air flow is already present, thus enhancing the air flow compared to a respective zero level. Yet, when driving, some air flow through the air duct is typically present and can thus be further enhanced by the air flow generator. The air flow generator may help to ensure that a sufficiently strong air curtain is formed in front of the vehicle wheel to effectively reduce its aerodynamic resistance.

The air flow generator may be configured to increase the enhancing of the air flow at a decreasing travel speed of the vehicle. The decreasing travel speed weakens an air flow streaming through the air duct. This is at least partially compensated for by the air flow generator of this embodiment.

Additionally or alternatively, the air flow generator may be configured to decrease the enhancing of the air flow at an increasing travel speed of the vehicle. At an increasing travel speed, a strong air flow through the air duct may already be generated from the movement of the vehicle alone. This may allow for reducing operation of the air flow generator to e.g. save energy.

In one embodiment, the air guiding arrangement comprises at least one active aero shutter that is configured to close a cross-section of the air duct to variable extents. in a generally known manner, aero shutters may comprise members, e.g. rudders or vanes, that are movable to close or obstruct a cross-section of an air duct to variable degrees. Active aero shutters comprise actuators (e.g. electric motors) to move such members, thereby varying a free cross-section of an air duct in a controllable manner. It has been found to be aerodynamic efficient when, according to embodiments of this invention, the active aero shutter is provided close to, at or in front of the inlet. In particular when closed, a respective location of the active shutter may help to reduce drag.

The active aero shutter may be configured to increase the extent of closing of the cross-section of the air duct, thus increasingly closing the air duct, at an increasing travel speed of the vehicle. This may help to reduce drag generated by the air duct, whereas the increased travel speed still ensures a sufficiently strong air flow through the air duct.

Additionally or alternatively, the active aero shutter may be configured to decrease the extent of closing the cross-section of the air duct, thus increasingly opening the air duct, at a decreasing travel speed of the vehicle. This may help to compensate for the decrease in strength of the air flow through the air duct resulting from slowing down the vehicle.

In sum, the active aero shutter helps to reduce drag caused by the air duct and thus helps to improve the overall aerodynamic characteristics of the vehicle, while still ensuring that the aerodynamic resistance of the vehicle wheel is reduced.

In one embodiment, a width of the air deflector and/or of the outlet is at least as large as half of a width of the circumferential face of the vehicle wheel, wherein each of said widths extends orthogonally to a longitudinal axis of the vehicle. For example, said widths may be measured along a width axis discussed above. Dimensioning said widths in the disclosed manner helps to generate a desired air stream out of the outlet and a sufficient shielding of the outlet and/or the vehicle wheel by the air deflector.

According to one aspect, a distance between the air deflector and a road surface is at least 80%, in particular at least 90% or at least 95% of a distance between the vehicle's underside and the road surface. Put differently, a dimension of the air deflector measured along the same axis as the distance between the vehicle's underside and the road surface is preferably less than 20% and in particular less than 10% or less than 5% of said distance. This means that the air deflector has a respectively limited size and in particular a respectively limited length protruding from the vehicle's underside.

In one embodiment the air deflector is (in particular mechanically) secured to or integrally formed with the air duct. For example, at least one member of the air duct that in particular comprises at least one edge section of the outlet may be respectively secured to or integrally formed with the air deflector. The air duct and air deflector may comprise or be formed of a plastic material, in particular when being integrally formed with one another. Positioning the air deflector and air duct respectively close to one another or even integrally forming them helps to increase compactness.

Additionally or alternatively the air deflector may be formed or may be located at an edge of the outlet. Again, this helps to improve compactness.

According to one embodiment, the air deflector is plate-shaped. A front face of the air deflector (in particular when being plate-shaped) may face towards the front portion of the vehicle. A rear face of the air deflector (in particular when being plate-shaped) may face the circumferential face of the vehicle. A thickness of the air deflector (in particular when being plate-shaped) may extend along the longitudinal axis of the vehicle wheel. The air deflector (in particular when being plate-shaped) may be planar or non-planar, e.g. due to being curved.

It may be provided that the air deflector protrudes from the vehicle's underside towards a road surface, in particular wherein the air deflector protrudes at an angle of at least 60°, in particular at least 80° from said underside towards the road surface. This angle may e.g. be measured between the front face or the rear face of the air deflector and the vehicle's underside. By providing a respectively large angle, a large area of the circumferential face of the vehicle wheel can be covered at a reduced size of the air deflector.

The invention also concerns an air guiding arrangement for a vehicle according to any of the of the aspects disclosed herein. That is, the invention concerns an air guiding arrangement that can be used for providing a vehicle, the vehicle being configured according to any of the aspects disclosed herein.

Embodiments of the invention are discussed below with reference to the attached figures. Same or similar features may be marked with same reference signs throughout the figures.
- Figure 1: is a schematic front view of a part of a vehicle according to a first embodiment of the invention.
- Figure 2: is a schematic side view of the embodiment of Figure 1.
- Figure 3: is another schematic side view of the embodiment of Figure 1.

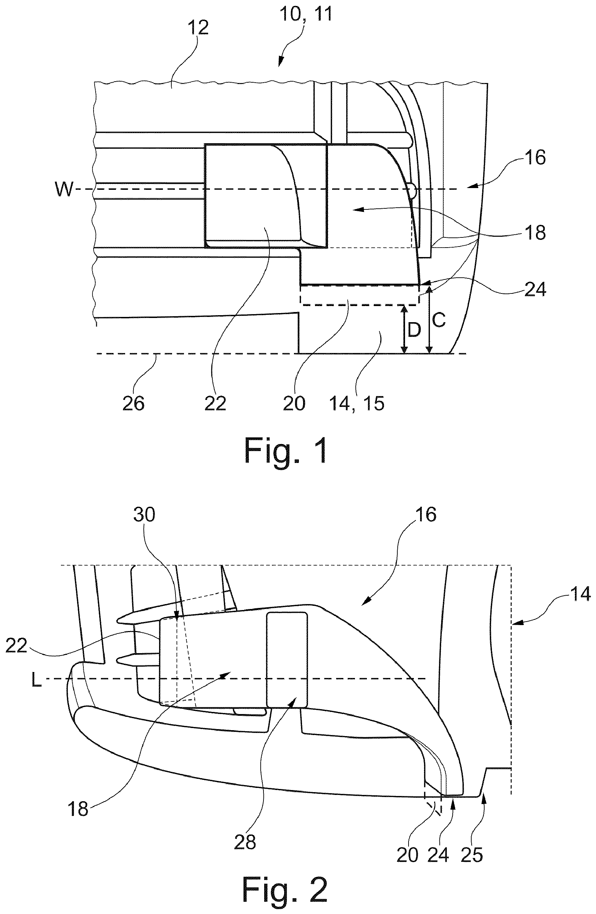

Figure 1 shows part of a vehicle 10, said vehicle 10 e.g. being a car. Specifically, part of a front portion 11 of the vehicle 10 is shown, said front portion 11 comprising a front skirt 12 and front face of the vehicle 10. Also, a circumferential face 15 of a front wheel 14 is shown and faces the viewer in Figure 1. Apart from the air guiding arrangement 16 disclosed herein, the vehicle 10 is configured according to known prior art examples.

Figure 1 shows a front view of a part of the front portion 11 vehicle 10, while Figure 2 shows a side view said same part of the front portion 11. Here below, Figures 1 and 2 are jointly discussed. It is noted that Figures 1 and 2 depict only one front wheel 14 along with only one air guiding arrangement 16. Yet, the vehicle 10 may comprise a further front wheel 14 along with a further air guiding arrangement 16, e.g. to the left of the depicted front wheel 14 in Figure 1.

The air guiding arrangement 16 comprises an air duct 18 and an air deflector 20. The air duct 18 has an inlet 22 and an outlet 24 which are fluidically connected. In the shown example, the air duct 18 is formed by one single member that is e.g. made from a plastic material. Alternatively, it may be formed from multiple members which each delimit a section of the air duct 18.

The air duct 18 is an internal member of the vehicle 10 and may not actually be visible from outside. Accordingly, in the schematic illustrations of Figures 1 and 2, it is depicted for purposes of understanding the invention, but is actually shielded from the exterior by the front bumper cover 12. The inlet 22 is positioned so as to face a rear side of the front bumper cover 12 (see Figure 2). In more detail, the inlet 22 is positioned in a region where the front bumper cover 12 has at least one cut-out, thus allowing air to stream into the inlet 22.

The outlet 24, on the other hand, is located at an underside of the vehicle 10, said underside facing a road surface 26 on which the front wheel 14 rests. The inlet 22 is oriented substantially vertically, whereas the outlet 24 is oriented substantially horizontally. As is visible from Figures 1 and 2, the air duct 18 is thus angled to fluidically connected the air inlet 22 and air outlet 24 which extend in different spatial planes.

Only by way of example, the air inlet 22 and air outlet 24 are partially spaced apart from another along a width axis W of the vehicle 10. They could also fully overlap one another along said width axis W, i.e. fully extend along a common section of said width axis W. Alternatively, they could at least overlap one another along said width axis W to a larger degree than depicted.

The air deflector 20 is indicated by dashed lines in Figures 1 and 2. It is a plate-shaped member whose front face faces the viewer in Figure 1 and whose rear face faces the vehicle wheel 14. The air deflector 20 is connected to a front edge of the air outlet 24 or is integrally formed therewith, see Figure 2. Accordingly, when viewed along a longitudinal axis L of the vehicle 10, the air outlet 24 is positioned in between the air deflector 20 and the front wheel 14. It is noted that in Figure 2, the front wheel 14 is not depicted in detail, but a position thereof is indicated. Further, in Figure 2 a space 25 is indicated into which air streams from the outlet 24. Again, this space 25 is located in between the air deflector 20 and front wheel 14 when viewed along the longitudinal axis L.

From Figure 1, it is evident that a width dimension of the air deflector 20 and the outlet 24 is at least half as large as a width dimension of the front wheel 14 and in particular of its circumferential face 15. Also, the width dimensions of the air deflector 20 and air outlet 24 are substantially identical. Each of said width dimensions extend along the width axis W indicated in Figure 1 and thus orthogonally to a non-illustrated vertical axis and to a longitudinal axis L of the vehicle 10. The non-illustrated vertical axis is identical to a vertical image axis as well as to a vertical spatial axis.

Figure 1 further illustrates a ground clearance C between the vehicle's underside and the road surface 26. This ground clearance C corresponds to a distance between the outlet 24 and the road surface 26. Further, a distance D between a vertically lower edge of the air deflector 20 and the road surface 26 is shown. It can be seen that said distance D is smaller than the ground clearance C. Nonetheless, it may e.g. be up to and including 80% of said ground clearance C.

This means that the air deflector 20 has a respectively compact vertical extension. Put differently, its vertical dimension and in particular its length by means of which protrudes from the underside of the vehicle 10 is limited, so as to stay close to the vehicle's underside. This helps to maintain a sufficient ground clearance, but also reduce visibility of the air deflector 20 when e.g. standing in front of the vehicle 10. Nonetheless, in combination with the air duct 18 it still helps to achieve significant reductions in the aerodynamic resistance of the front wheel 14.

Figure 2 shows further optional units of the air duct 18. Both, none or only one of said optional units may be provided. A first optional unit is and air flow generator 28, e.g. in form of a fan. This air flow generator 28 is located within the air duct 18, e.g. approximately at half distance between the inlet 22 and outlet 24. The air flow generator 28 is configured to enhance an air flow through the air duct 18 compared to a passive air flow that is generated by driving alone. The air flow generator 28 is operable to vary the extent of enhancing said air flow, e.g. by varying the rotations per minute of the fan. As disclosed above, the extent of enhancing the air flow may be variable as a function of the travelling speed of the vehicle 10.

Another optional unit of the air duct 16 is an only schematically indicated active aero shutter 30. In more detail, the position of said active aero shutter 30 is indicated by a vertical dotted line in Figure 2. Accordingly, said active aero shutter 30 is positioned close to and e.g. directly behind the inlet 22 or alternatively within said inlet 22. The active aero shutter 30 comprises non-illustrated members that are movable by a non-illustrated actuator to open and close a cross-section of the air duct 16 by variable degrees. As discussed above, this extent of opening and closing may be variable as a function of the travelling speed of the vehicle 10.

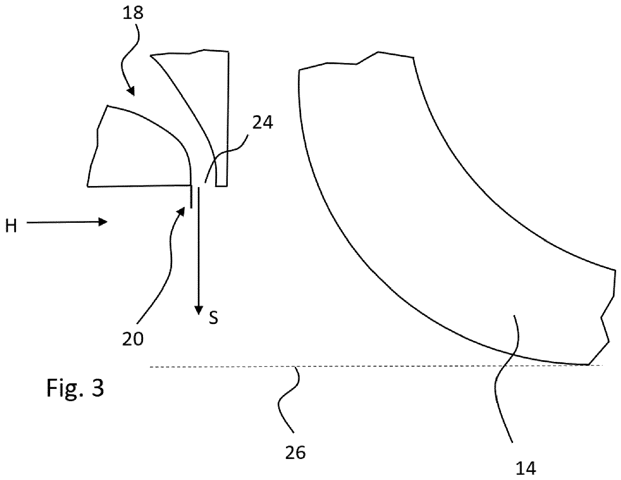

Figure 3 is a further schematic side view of the embodiment of Figures 1 and 2. Only part of the air duct 18 is shown, wherein said part is close to the outlet 24. It is shown that said outlet 24 as well as a portion of the air duct 18 directly preceding it are oriented and curved to generate an air stream S that is expelled from the outlet 24 in a substantially vertical manner. The air stream S thus streams towards a region of the road surface 26 that is vertically opposite to the outlet 24 and that is traversed by the vehicle wheel 14 when travelling forward.

It can also be seen that when driving, said air stream S is shielded from a headwind H by the air deflector 20 when leaving the outlet 24. Thus, the air stream S can be stably guided towards and/or into a region of the road surface 26 below of the outlet 24 and located in front of the front wheel 14. This creates an air curtain that effectively shields the front wheel 14 from much of the headwind H.

It is to be understood that depending on a strength of the headwind H, the air stream S will not be entirely vertical at increasing distances to the air deflector 20. Rather, it will be tilted towards the front wheel 14. Nonetheless, the air deflector 20 helps to limit the extent of said tilting and to ensure that most of the air stream S reaches the road surface 26 instead of directly reaching or before reaching the front wheel 14. This is advantageous for generating an aerodynamically effective air curtain.

Referring back to Figure 1, it can be seen that the outlet 24 and the air deflector 20 overlap with the circumferential face 15 of the front wheel 14 along the width axis W. This underlines that the air stream S of Figure 3 and thus the air curtain generated by the air duct 16 is indeed provided in front of the circumferential face 15 of the front wheel 14 to effectively shield it from the headwind H.

## Claims

1. A vehicle (10) having an air guiding arrangement (16), the air guiding arrangement (16) comprising:
- an air duct (18) having an inlet (22) and an outlet (24), wherein the inlet (22) is located in a front portion (11) of the vehicle (10) and the outlet (24) is located at an underside of the vehicle (10); and
- an air deflector (20),
wherein the air deflector (20) is arranged opposite to a circumferential face (15) of a vehicle wheel (14) and is closer to the front portion (11) of the vehicle (10) than at least a part of the outlet (24), and wherein the air duct (18) is configured to guide air from its outlet (24) into a space (25) in between the air deflector (20) and the vehicle wheel (14).

2. The vehicle (10) of claim 1,
wherein when the air deflector (20) is located closer to the front portion (11) of the vehicle (10) than the vehicle wheel (14).

3. The vehicle (10) of any of the previous claims,
wherein the air duct (18) is configured to guide air into a region of a road surface (26) that is traversable by the vehicle wheel (16).

4. The vehicle (10) of any of the previous claims,
wherein the inlet (20) extends in a first spatial plane and the outlet (24) extends in a second spatial plane, wherein the first spatial plane and second spatial plane extend at an angle of at least 60° to one another.

5. The vehicle (10) of any of the previous claims,
wherein the air duct (18) comprises an air flow generator (28) that is configured to enhance an air flow through the air duct (18).

6. The vehicle (10) of claim 5,
wherein the air flow generator (28) is configured to increase the enhancing of the air flow at a decreasing travel speed of the vehicle (10), and/or
wherein the air flow generator (28) is configured to decrease the enhancing of the air flow at an increasing travel speed of the vehicle (10).

7. The vehicle (10) of any of the previous claims,
wherein the air guiding arrangement (16) comprises at least one active aero shutter (30) that is configured to close a cross-section of the air duct (16) to variable extents.

8. The vehicle (10) of claim 7,
wherein the active aero shutter (30) is configured to increase the extent of closing at an increasing travel speed of the vehicle (10), and/or
wherein active aero shutter (30) is configured to decrease the extent of closing at a decreasing travel speed of the vehicle (10) .

9. The vehicle (10) of any of the previous claims,
wherein a width of the air deflector (20) and/or of the outlet (24) is at least as large as half of a width of the circumferential face (15) of the vehicle wheel (14), wherein each of said widths extends orthogonally to a longitudinal axis (L) of the vehicle (10).

10. The vehicle (10) of any of the previous claims,
wherein a distance (D) between the air deflector (20) and a road surface (26) is at least 80%, in particular at least 90%, of a distance (C) between the vehicle's underside and the road surface (26).

11. The vehicle (10) of any of the previous claims,
wherein the air deflector (20) is secured to or integrally formed with the outlet (24) of the air duct (16).

12. The vehicle (10) of any of the previous claims,
wherein the air deflector (20) forms or is located at an edge of the outlet (24).

13. The vehicle (10) of any of the previous claims,
wherein the air deflector (20) is plate-shaped.

14. The vehicle (10) any of the previous claims,
wherein the air deflector (20) protrudes from the vehicle's underside towards a road surface (26), in particular wherein the air deflector (20) protrudes at an angle of at least 60° from said underside towards the road surface (26).

15. An air guiding arrangement (16) for providing a vehicle (10) that is configured according to any of the previous claims.

## Amended claims

### Amended claims in accordance with Rule 137(2) EPC.

1. A vehicle (10) having an air guiding arrangement (16), the air guiding arrangement (16) comprising:
- an air duct (18) having an inlet (22) and an outlet (24), wherein the inlet (22) is located in a front portion (11) of the vehicle (10) and the outlet (24) is located at an underside of the vehicle (10); and
- an air deflector (20),
wherein the air deflector (20) is arranged opposite to a circumferential face (15) of a vehicle wheel (14) and is closer to the front portion (11) of the vehicle (10) than at least a part of the outlet (24), and wherein the air duct (18) is configured to guide air from its outlet (24) into a space (25) in between the air deflector (20) and the vehicle wheel (14);
**characterized in that**
the air duct (18) comprises an air flow generator (28) that is configured to enhance an air flow through the air duct (18).

2. The vehicle (10) of claim 1,
wherein when the air deflector (20) is located closer to the front portion (11) of the vehicle (10) than the vehicle wheel (14).

3. The vehicle (10) of any of the previous claims,
wherein the air duct (18) is configured to guide air into a region of a road surface (26) that is traversable by the vehicle wheel (16).

4. The vehicle (10) of any of the previous claims,
wherein the inlet (20) extends in a first spatial plane and the outlet (24) extends in a second spatial plane, wherein the first spatial plane and second spatial plane extend at an angle of at least 60° to one another.

5. The vehicle (10) of claim 1,
wherein the air flow generator (28) is configured to increase the enhancing of the air flow at a decreasing travel speed of the vehicle (10), and/or
wherein the air flow generator (28) is configured to decrease the enhancing of the air flow at an increasing travel speed of the vehicle (10).

6. The vehicle (10) of any of the previous claims,
wherein the air guiding arrangement (16) comprises at least one active aero shutter (30) that is configured to close a cross-section of the air duct (16) to variable extents.

7. The vehicle (10) of claim 6,
wherein the active aero shutter (30) is configured to increase the extent of closing at an increasing travel speed of the vehicle (10), and/or
wherein active aero shutter (30) is configured to decrease the extent of closing at a decreasing travel speed of the vehicle (10).

8. The vehicle (10) of any of the previous claims,
wherein a width of the air deflector (20) and/or of the outlet (24) is at least as large as half of a width of the circumferential face (15) of the vehicle wheel (14), wherein each of said widths extends orthogonally to a longitudinal axis (L) of the vehicle (10).

9. The vehicle (10) of any of the previous claims,
wherein a distance (D) between the air deflector (20) and a road surface (26) is at least 80%, in particular at least 90%, of a distance (C) between the vehicle's underside and the road surface (26).

10. The vehicle (10) of any of the previous claims,
wherein the air deflector (20) is secured to or integrally formed with the outlet (24) of the air duct (16).

11. The vehicle (10) of any of the previous claims,
wherein the air deflector (20) forms or is located at an edge of the outlet (24).

12. The vehicle (10) of any of the previous claims,
wherein the air deflector (20) is plate-shaped.

13. The vehicle (10) any of the previous claims,
wherein the air deflector (20) protrudes from the vehicle's underside towards a road surface (26), in particular wherein the air deflector (20) protrudes at an angle of at least 60° from said underside towards the road surface (26).

14. An air guiding arrangement (16) for a vehicle (10) that is configured according to any of the previous claims.
